(19)

Europäisches
Patentamt
European
Patent Office
Office européen
des brevets

(11) **EP 2 368 628 A1**

(12) **EUROPEAN PATENT APPLICATION**

(43) Date of publication:
**28.09.2011 Bulletin 2011/39**

(51) Int Cl.:
*B01J 23/10* [(2006.01)]  *B01J 23/20* [(2006.01)]
*B01D 53/86* [(2006.01)]  *B01D 53/94* [(2006.01)]

(21) Application number: **10157791.4**

(22) Date of filing: **25.03.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(71) Applicant: **Paul Scherrer Institut
5232 Villigen (CH)**

(72) Inventors:
• **Elsener, Martin
5313, Klingnau (CH)**

• **Kröcher, Oliver
5313, Klingnau (CH)**
• **Casapu, Maria Cristina
79761 Waldshut-Tiengen (DE)**

(74) Representative: **Fischer, Michael
Siemens AG
Postfach 22 16 34
80506 München (DE)**

(54) **Catalyst for a DeNOx-application and a process for selective catalytic reduction of nitrogen oxides**

(57)  When summarizing the prior art, it is an objective of the present invention to provide a $NH_3$-SCR catalyst which features excellent thermal stability and resistance towards sulfur poisoning. Further, a process for the selective catalytic conversion (SCR) of nitrogen oxides to nitrogen shall be provided excelling at high conversion rates over a broad width of reaction temperatures and at high catalyst lifetime.

With respect to the catalyst this objective is achieved according to the present invention by a catalyst for a SCR-DeNOx-application having a catalytic active component; said catalytic active component comprises cerium oxide and niobium oxide whereby the content of cerium oxide is at least 10 wt% and the content of niobium oxide is at least 10 wt%.

With respect to the process for the SCR of nitrogen oxides this objective is achieved according to the present invention by a process for a SCR of nitrogen oxides comprised in an exhaust gas of a combustion machine/engine or any other NOx source comprising the step of bringing the nitrogen oxides into contact with a catalyst as given in the claims 1 to 11. Preferably this process is carried out at elevated temperatures in the range from 150 to 550 ˚C, at pressure in the range from $10^3$ to $10^5$ hPa and at an gas hourly space velocity (GHSV) in the range from $5*10^3$ to $10^5$ $h^{-1}$.

**EP 2 368 628 A1**

**Description**

The present invention is related to a catalyst for a DeNOx-application and a process for the selective catalytic reduction of nitrogen oxides.

The recent requirements on improved fuel economy and reduced emission of the greenhouse gas $CO_2$ forced the automotive industry to design the so called lean-burn gasoline engine and to push the development of diesel engines. The excess of oxygen during the combustion process in these engines promotes the oxidation of HC and CO and thus reduce their concentration in the exhaust gas. Additionally, the raw $NO_x$ emissions are lowered, due to a reduced combustion temperature. Nevertheless, the major drawback of lean burning is the inefficiency of the three-way catalyst or of the diesel oxidation catalyst to reduce $NO_x$ to $N_2$ under these conditions.

Among the various technologies which have been proposed for the elimination of $NO_x$ emissions, the selective catalytic reduction (SCR) with ammonia is believed to be most suitable to fulfill this task. During the SCR process the reducing agent ($NH_3$, urea) is added by injection into the exhaust stream. Over the catalyst surface ammonia reacts with $NO_x$ to form $N_2$.

However, the catalytic systems proposed so far as being the most promising still have serious problems. The conventional vanadia-based catalysts have a very low thermal stability due to the volatilization of vanadia species above 650 ˚C. The limited thermal stability under humid conditions represents also a problem for metal-exchanged zeolite SCR catalysts.

In order to overcome this problem different mixed metal oxides have been proposed, for which superior thermal stability have been claimed. Typical representatives for this group of SCR catalysts have been disclosed in the US patent application US 2009/0304566 A1. The catalyst includes as a first component copper, chromium, cobalt, nickel, manganese, iron, niobium, or mixtures thereof. The concentration ranges from 1 to 20 wt%, most preferably 5 to 8 wt%. A second component is selected from a group consisting of cerium, a lanthanide, a mixtures of lanthanides or mixtures thereof. The concentration for the second component ranges from 2 to 35 wt%, most preferably 8 to 15 wt%. Further, a third component is provided which is characterized by an increased surface acidity. The acidic surface materials in this regard may include metal oxide materials such as aluminum, silicon, titanium or zirconium oxides which have surface properties modified by treatment with materials containing sulfur, tungsten, phosphorus, silicon, titanium, or molybdenum, or any other material which could modify surface acidity. In further embodiments, the at least one component characterized by increased surface acidity includes a zeolite. Other example catalyst can be found in the international application WO 2008/051752 A2, in the US patent applications US2007/0099795A1 and US2009/0297419 and in the Japanese Patent JP3510541B2.

When summarizing this prior art knowledge, it is therefore an objective of the present invention to provide a $NH_3$-SCR catalyst which features excellent thermal stability, in particular better properties as compared to the catalysts disclosed in the prior art cited above. Further, a process for the selective catalytic conversion (SCR) of nitrogen oxides to nitrogen shall be provided excelling at high conversion rates over a broad width of reaction temperatures and at high catalyst lifetime.

With respect to the catalyst, this objective is achieved according to the present invention by a catalyst for a SCR-DeNOx-application having a catalytic active component; said catalytic active component comprises cerium oxide and niobium oxide whereby the content of cerium oxide is at least 10 wt% and the content of niobium oxide is at least 10 wt%.

With respect to the process for the SCR of nitrogen oxides this objective is achieved according to the present invention by a process for a SCR of nitrogen oxides comprised in an exhaust gas of a combustion machine/engine comprising the step of bringing the nitrogen oxides into contact with a catalyst as given in the claims 1 to 11. Preferably this process is carried out at elevated temperatures in the range from 150 to 550 ˚C, at pressure in the range from $10^3$ to $10^5$ hPa and at an gas hourly space velocity (GHSV) in the range from $5*10^3$ to $10^5$ h$^{-1}$.

The present catalyst and the present process therefore proves that the combination of niobium oxide / cerium oxide is a very promising $NH_3$-SCR catalyst wherein the content of cerium oxide shall be greater than 10 wt% as compared to the total weight of the catalytic active component (without binders, extrusion agents or washcoat materials, such as alumina, silica, titania, zirconia). Very promising catalysts in this regard have been achieved when the content of cerium oxide is at least 60 wt% and the content of niobium oxide is at least 10 wt%. The catalyst also exhibits a high resistance against $SO_2$ poisoning and also a high thermal stability.

The activity of a niobia-ceria catalyst is significantly enhanced by increasing the oxygen mobility of the $CeO_2$ lattice.

In this context, it has been found that an almost complete conversion of NO can be obtained between 250 - 500 ˚C when the cerium oxide is doped with at least one oxide of lanthanium, praseodymium and neodymium or mixtures thereof.

When required, the thermal stability of the niobia-ceria catalyst can be further increased by replacing the ceria with a ceria-zirconia mixed oxide, thereby observing that the content of ceria still ranges at the level given above. The cerium oxide therefore may be mixed with zirconia, preferably a solid solution of ceria and zirconia shall be regarded whereby the content in wt% of ceria is higher than that of zirconia.

An excellent structure of the niobia-ceria catalyst can be achieved when the mixture of cerium oxide and niobium oxide is achieved by a coprecipitation of a cerium precursor and niobium precursor and subsequent calcination in air. Alternatively, an excellent structure can be gained when the mixture of cerium oxide and niobium oxide is achieved by wet mechanical mixing of a cerium precursor and niobium precursor and subsequent calcination in air.

A considerable increase of the high temperature activity can be achieved by a mild sulfation of the catalyst surface which can be regarded as a sulfur-promoting treatment.

The present catalyst can be used in form of powders, coated on pellets of any form and size, or extruded in various shapes, such as cylinders, stars, hollow cylinder, etc. In the field of exhaust gas cleaning the preferred way to apply the catalysts is in form of honeycomb monoliths. The present catalyst can be either extruded with extrusion agents, binders and other components in form of a honeycomb monolith or washcoated on metallic, ceramic or carbonaceous honeycomb monoliths. According to the state of the art, a washcoat may be produced by mixing the present catalyst with water, binders, surfactants, etc. and coating the honeycomb monolith with the resulting catalyst suspension. One may add to the catalyst washcoat also inert materials or typical washcoat base materials, such as aluminia, to adopt its activity to the specific application. Finally, the present catalyst may also be mixed with other SCR catalyst materials, such as metal-exchanged zeolites or vanadia-based SCR catalysts.

Preferred examples of the present invention are hereinafter described in more detail referencing the attached drawing which depicts in:

Figure 1     the graphs of the DeNOx activity (a) and $N_2O$ emissions (b) determined for NbCe-1 (+), $Nb_2O_5$ (x), $CeO_2$ ( ) and the reference WVTi ($\oplus$) catalysts at $\alpha = NH_{3,in}/NO_{x,in} = 1$, GHSV = 52000 $h^{-1}$, gas feed = 10% $O_2$, 5% $H_2O$, $NO_{in}$ = 1000 ppm, $NH_{3,in}$ = 1000 ppm in $N_2$; the DeNOx activity of the catalyst NbCe-1 (+) with a mixture of NO and $NO_2$ is additionally plotted in Fig. 1a (10% $O_2$, 5% $H_2O$, $NO_{in}$ = 500 ppm, $NO_{2,in}$ = 500 ppm, $NH_{3,in}$ = 1000 ppm in $N_2$);

Figure 2     the graphs of the SCR activity (a) and $N_2O$ emissions (b) of 10NbCe ($\triangle$), 30NbCe ($\blacktriangle$) and WVTi ($\oplus$), GHSV = 52000 $h^{-1}$, gas feed = 10% $O_2$, 5% $H_2O$, $NO_{in}$ = 1000 ppm, $NH_{3,in}$ = 1000 ppm in $N_2$.

Figure 3     the graphs of the SCR activity of 10NbCe ($\triangle$), 30NbCe ($\blacktriangle$) and WVTi ($\oplus$) at 10 ppm $NH_3$ slip, GHSV = 52000 $h^{-1}$, gas feed = 10% $O_2$, 5% $H_2O$, $NO_{in}$ = 1000 ppm, $NH_3$ = 10-1010 ppm in $N_2$.

Figure 4     the graphs of the DeNOx activity of 10NbCe ($\triangle$) and 30NbCe ($\blacktriangle$) with a mixture of NO and $NO_2$, GHSV = 52000 $h^{-1}$, gas feed = 10% $O_2$, 5% $H_2O$, $NO_{in}$ = 500 ppm, $NO_{2,in}$ = 500 ppm, $NH_{3,in}$ = 1000 ppm in $N_2$; the SCR activities obtained with $NO_{in}$ = 1000 ppm from Figure 2 a are plotted again for comparison.

Figure 5     the graphs of the DeNOx activity for the fresh and thermally aged (12 h at 800 ˚C in air) 10NbCe ($\triangle$) and 30NbCe ($\blacktriangle$) catalysts, GHSV = 52000 $h^{-1}$, gas feed = 10% $O_2$, 5% $H_2O$, $NO_{in}$ = 1000 ppm, $NH_{3,in}$ = 1000 ppm in $N_2$;

Figure 6     the graphs of the DeNOx activity for the fresh and $SO_2$ poisoned (1h - dotted line and 5h - dashed line at 350 ˚C, 300 ppm $SO_2$, 1000 ppm NO, 1000 ppm $NH_3$, 10% $O_2$, 5% $H_2O$ in $N_2$) 10NbCe ($\triangle$) (a) and 30NbCe ($\blacktriangle$) catalysts (b), GHSV = 52000 $h^{-1}$, gas feed = 10% $O_2$, 5% $H_2O$, $NO_{in}$ = 1000 ppm, $NH_{3,in}$ = 1000 ppm in $N_2$; the SCR activity of the fresh WVTi ($\oplus$) catalyst from Figure 2 a is included for comparison; and

Figure 7     the graphs of the DeNOx activity for the fresh and thermally aged (12 h at 800 ˚C in air) 10NbCeZr ($\bigcirc$) and 30NbCeZr ($\bullet$) catalysts, GHSV = 52000 $h^{-1}$, gas feed = 10% $O_2$, 5% $H_2O$, $NO_{in}$ = 1000 ppm, $NH_{3,in}$ = 1000 ppm in $N_2$.

In the following examples, a new $NH_3$-SCR catalyst is described based on a niobia-ceria mixture, as alternative to the vanadia and metal-exchanged zeolite technologies. The catalyst is composed of niobia and ceria and may contain also La, Pr and Nd as promoters for the $CeO_2$ support. The catalyst may contain also sulfur species which increase the high temperature activity. A solid solution of $CeO_2$-$ZrO_2$ can be used to enhance the thermal stability of the catalyst.

Two series of catalyst were prepared for the following studies:

a) The first niobium - ceria catalyst with a molar ratio of Nb:Ce = 30:70 was synthesized by dissolving the corresponding amounts of cerium acetate and niobium (V) chloride in deionized water, followed by coprecipitation with an aqueous solution of $(NH_4)_2CO_3$. In a next step the precipitate was filtered, washed with water, dried overnight at 120 ˚C and calcined in air at 650 ˚C for 5 h in ambient air. In this description, the catalyst is referred to as NbCe-1.

Pure $CeO_2$ and $Nb_2O_5$ samples were prepared by the same coprecipitation method using the precursors mentioned above. In order to evaluate the SCR activity, a conventional $V_2O_5$/$WO_3$-$TiO_2$ catalyst containing 2.3 wt% $V_2O_5$, 8 wt% $WO_3$ and $TiO_2$ was used as reference material. This sample is referred to as WVTi.

b) The second catalyst series was prepared by wet mechanical mixing of ammonium niobate (V) oxalate hydrate (Aldrich) with a $CeO_2$ (doped with La, Pr, Nd) from Rhodia. The resulting slurry was dried overnight at 80 °C and afterwards calcined in air at 550 °C for 5 h. The catalysts obtained by this method had the following compositions: 10, 30, 50 and 90 wt.% $Nb_2O_5$ - $CeO_2$ (La, Pr, Nd). These catalysts are hereinafter referred to as 10NbCe, 30NbCe, 50NbCe and 90NbCe.

c) In order to increase the thermal stability of the catalyst, a solid solution of ceria (70 wt.%) and zirconia (30 wt.%) was used instead of $CeO_2$. The niobium component was afterwards added to this support using the procedure described in section b.

1.2 to 1.3 g of each catalyst powder were coated with a silica binder (Ludox AS-40) on small cordierite monoliths (4 cm × 1.7 cm × 1.2 cm) from Corning with a cell density of 400 cpsi. The thickness of the resulting coated layer was approximately 50 $\mu$m. The coated monoliths were calcined in air at 500 °C for 5 h.

A quartz plug-flow reactor was used for the catalytic tests. The reactor consisted of a pre-heating zone filled with steatite pearls and a second heating zone for the monolith catalysts. Heating was accomplished with heating coils and the temperature was regulated by two thermocouples, positioned up- and downstream of the catalyst. To avoid bypasses of reacting gases, a ceramic fiber mat was used to fix the monolith in the reactor.

The model gas feed was composed of 10% $O_2$, 5% $H_2O$, 0-1000 ppm NO, 0-2000 ppm $NH_3$ and balance $N_2$. The temperatures used for the catalytic performance tests ranged from 150 to 550 °C at a gas hourly space velocity (GHSV = volumetric gas flow/coated monolith volume) of 52 000 $h^{-1}$, which is representative of the conditions in SCR converters on board of diesel vehicles. NO, $NO_2$, $N_2O$ and unreacted $NH_3$ were quantified with a high resolution Nicolet Magna - IR 560 FTIR spectrometer, with a detection limit of 3-5 ppm for $NO_x$ and of 1 ppm for $N_2O$ and $NH_3$.

$NO_x$ conversion (DeNO$_x$) was defined as follows:

$$DeNOx = \frac{NO_{x,IN} - NO_{x,OUT}}{NO_{x,IN}} \qquad (1)$$

where $NO_x$ is the sum of NO and $NO_2$ concentrations.

Formal selectivities for the formation of $N_2O$, $N_2$ or $NO_x$ during $NH_3$ oxidation were defined by the following relationships:

$$S_{N_2O} = \frac{C_{N_2O}}{C_{NH_3\_in} - C_{NH_3\_out}} \qquad (2)$$

$$S_{NO_x} = \frac{C_{NO_x}}{C_{NH_3\_in} - C_{NH_3\_out}} \qquad (3)$$

$$S_{N_2} = 1 - (S_{NO_x} + S_{N_2O}) \qquad (4)$$

where ($C_{NH_3\_in}$- $C_{NH_3\_out}$) is the amount of converted ammonia and $C_{NO_x}$ is the sum of NO and $NO_2$ concentration.

The effect of $SO_2$ on the $NO_x$ removal activity was investigated by adding 300 ppm $SO_2$ to the reacting gas mixture containing 1000 ppm NO and 1000 ppm $NH_3$. The temperature used for the poisoning test was 350 °C. The duration was of 1 and 5 h.

The thermal stability of the catalysts was tested by calcining the catalyst-loaded monoliths at 800 ˚C for 12 h in ambient air.

The following results have been achieved:

a) SCR activity of niobia-ceria catalyst prepared by coprecipitation with $(NH_4)_2CO_3$

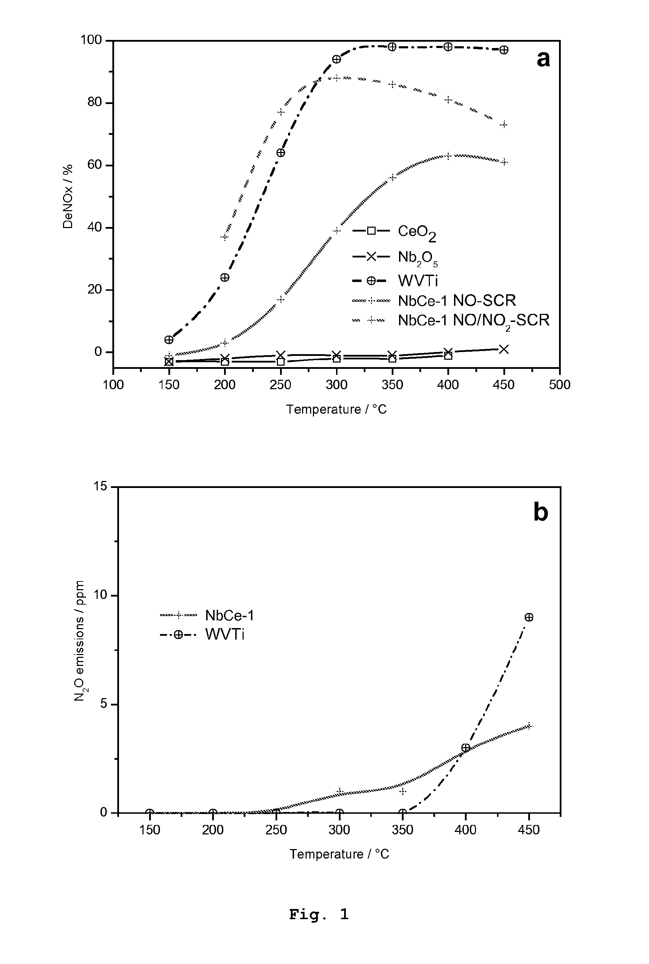

Figure 1 shows the graphs for the DeNOx activity (a) and $N_2O$ emissions (b) determined for NbCe-1 (+), $Nb_2O_5$ (x), $CeO_2$ ( ) and the reference WVTi ($\oplus$) at $\alpha = NH_{3,in}/NO_{x,in} = 1$, GHSV = 52000 h$^{-1}$, and a gas feed of 10% $O_2$, 5% $H_2O$, $NO_{in}$ = 1000 ppm, $NH_{3,in}$ = 1000 ppm in $N_2$. No catalytic activity was detected for the ceria and niobia pure samples. The $NO_x$ removal efficiency of the NbCe-1 catalyst is clearly much superior compared to that obtained for the pure oxides. This results probably from the combination of the niobia acidic properties with the known oxidation ability of the $CeO_2$ support, particularly at increased temperatures. 39% NO is converted to nitrogen at 300 ˚C whereas 63% DeNO$_x$ was measured at 400 ˚C for NbCe-1 (Fig. 1a). Besides, very low $N_2O$ emissions were detected over the entire temperature window (Fig. 1b).

The performance mentioned above is very promising but lower relative to that exhibited by a WVTi conventional catalyst (Fig. 1a). Nevertheless, when $NO_2$ was admitted to the gas stream (500 ppm $NO_2$ and 500 ppm NO, dashed line in Fig. 1a) a considerable increase of the activity was obtained. Thus, a DeNOx of 77% was measured at 250 ˚C and a maximum of 88% at 300 ˚C. These data allowed us to conclude that the NO-SCR activity of the NbCe-1 catalyst is clearly limited by the poor oxidation capacity of the undoped $CeO_2$, obtained by precipitation.

b) Niobia-ceria prepared by wet mechanical mixing of with $CeO_2$ (La, Pr, Nd)

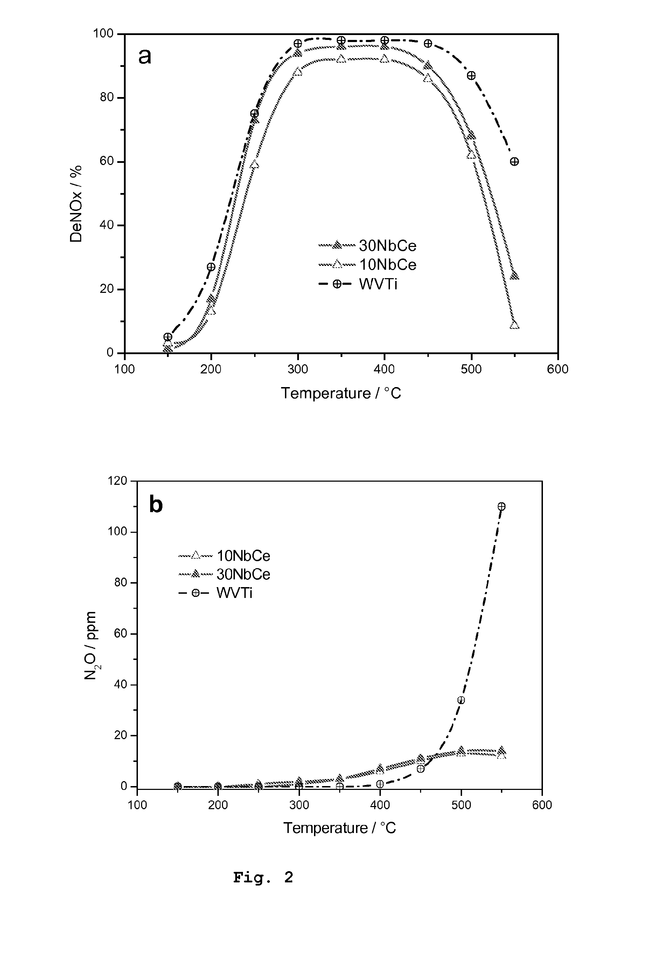

Figure 2 illustrates the SCR activity (a) and $NO_2$ emissions (b) at $\alpha$ = 1 of 10NbCe ($\Delta$), 30NbCe ($\blacktriangle$) and WVTi ($\oplus$) catalysts. The $NO_x$ conversion measured for the niobia-doped ceria catalyst at $\alpha = NH_{3,in}/NO_{x,in} = 1$ was remarkably high and similar to that shown by the WVTi catalyst. Only above 450 ˚C the drop of the activity was more pronounced for NbCe in comparison to the vanadia-containing catalyst. The 30NbCe catalyst showed a DeNOx of 72% already at 250 ˚C and achieves the full NO conversion between 300 ˚C and 450 ˚C. The decrease of the niobium amount in the catalysts resulted in a small diminishment of the SCR activity at all studied temperatures. Regarding the $N_2O$ emissions during the SCR reaction, the concentration detected for niobia-ceria samples was comparable at low temperatures to that measured for WVTi. It must be noted that the formation of $N_2O$ remained below 20 ppm for the niobia-doped ceria sample even at 550 ˚C whereas it exceeded 100 ppm for WVTi.

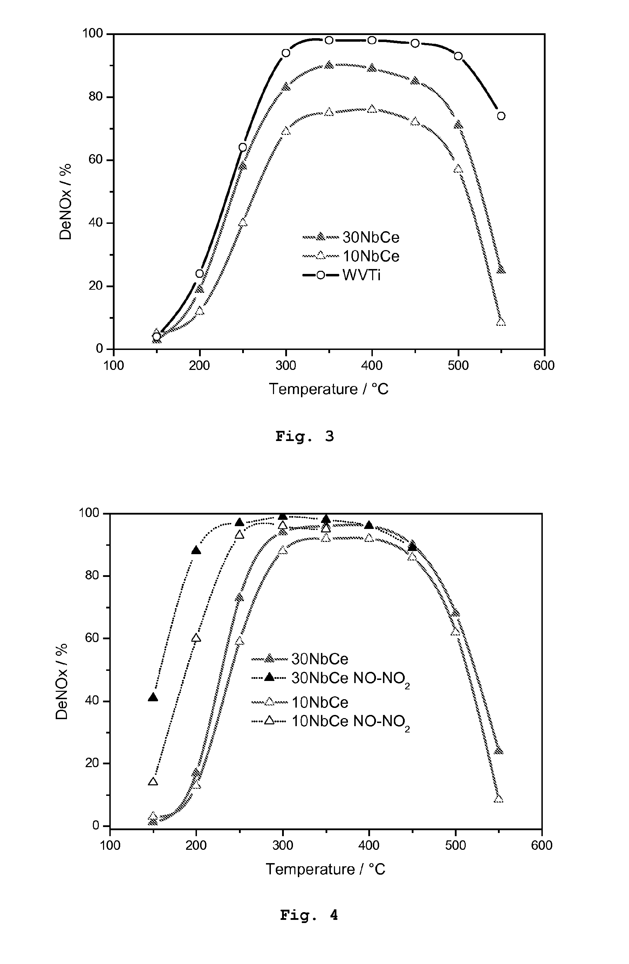

Since in real-world applications only the SCR activity obtained at a low $NH_3$ slip is of interest, the dosage of ammonia was controlled in a separate experiment such that the $NH_3$ slip was set to 10 ppm. Fig. 3 shows the corresponding DeNOx values. For this $NH_3$ slip, the performance of the 30NbCe sample is slightly lower than that of WVTi but still rages to almost 90% NO conversion between 300 and 450 ˚C. For a lower amount of niobia in the catalyst the $NH_3$ slip detected at the studied reaction temperatures was higher relative to that measured for 30NbCe.

Figure 4 illustrates the graphs for the DeNOx activity of fresh 10NbCe ($\Delta$) and 30NbCe ($\blacktriangle$) with $NO_{in}$ = 500 ppm, $NO_{2,in}$= 500 ppm and $NH_{3,in}$ = 1000 ppm. When $NO_2$ and NO were dosed in a ratio of 1:1 both catalysts showed a significant increase of the performance. Between 250 ˚C and 450 ˚C a DeNOx activity of more than 95% was measured for both 10NbCe and 30NbCe. The activity decreased for the 10NbCe sample at 200 ˚C to 60% but remained above 80% for the 30 wt% niobia sample. At 150 ˚C only 40% of NO were converted to $N_2$ for 30NbCe and about 15% for 10NbCe. One has to be mentioned that the formation of ammonium nitrate was not considered during the DeNOx calculation at 150 ˚C.

c) Thermal stability

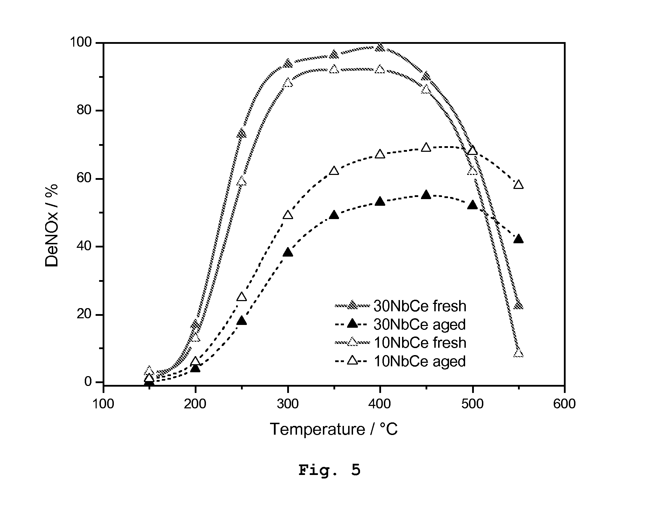

Figure 5 illustrates the graphs of the DeNOx activity at $\alpha$ = 1 for the fresh and thermally aged (12 h at 800 ˚C in air) 10NbCe ($\Delta$) and 30NbCe ($\blacktriangle$) catalysts. The stability of the catalyst towards thermal stress has been tested by calcining the 10 and 30 wt% $Nb_2O_5/CeO_2$ catalyst in air at 800 ˚C for 12 h. The NOx removal activity decreased for both niobia loadings but to a higher extent for the 30NbCe sample. Thus, at 400 ˚C the DeNOx was 53% for 30NcCe and 67% for the 10 wt% niobia catalyst. Above a temperature of 450 ˚C the activity showed an increase after the temperature treatment.

d) Promoting of the catalyst by sulfur containing species/$SO_2$ sensitivity

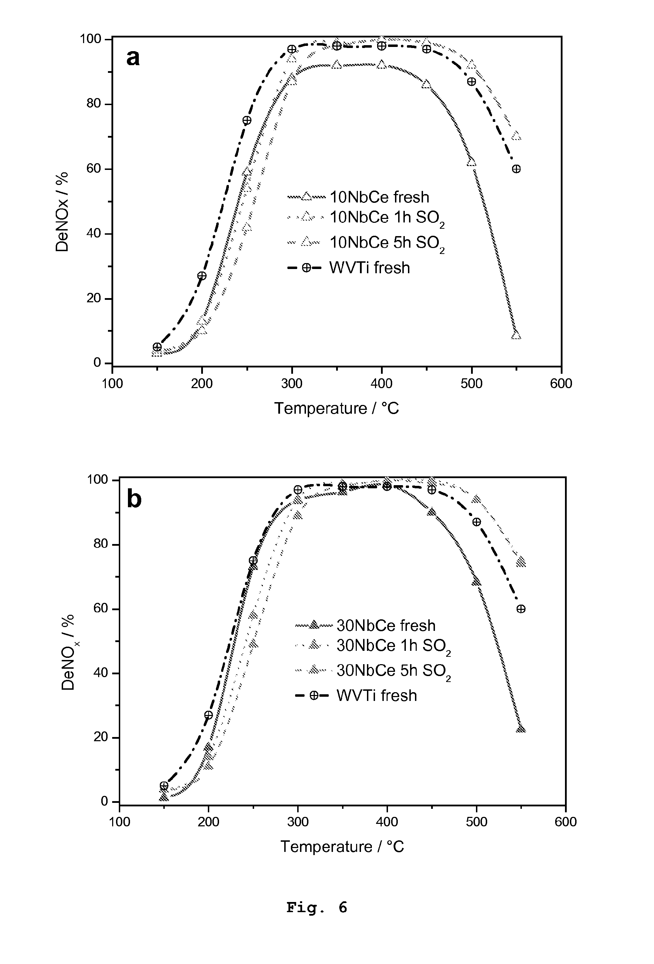

Figures 6a and b show the graphs for the DeNOx activity at $\alpha$ = 1 for the fresh and $SO_2$ poisoned 10NbCe ($\Delta$) and 30NbCe ($\blacktriangle$) catalysts. The SCR activity of the WVTi ($\oplus$) fresh catalyst is additionally included for comparison. Sulfur sensitivity was tested by exposing the catalysts at 350 ˚C to 300 ppm $SO_2$, 1000 ppm NO, 1000 ppm $NH_3$, 10% $O_2$, 5% $H_2O$ in $N_2$ for 1 h and 5 h, respectively. For both niobia concentrations the resulted effect was similar and consists of a small decrease of the activity below 300 ˚C and a notable increase at higher temperatures. The result of this investigation suggested the possibility to deliberately add sulfur species to the catalyst composition in order to obtain a better DeNOx performance in high temperature region (300 - 550 ˚C).

e) Increase of the thermal stability by utilization of $CeO_2$-$ZrO_2$ mixed oxides instead of $CeO_2$ doped with La, Pr, Nd

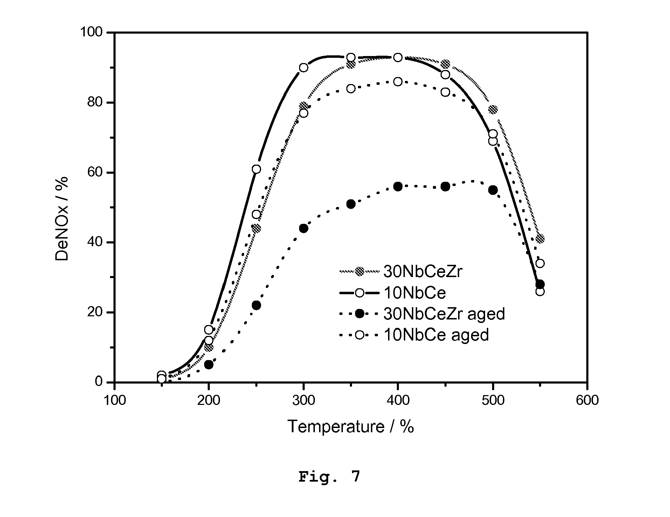

Figure 7 illustrates the graphs for the DeNOx activity at $\alpha$ = 1 for the fresh and thermally aged (12 h at 800 ˚C in air) 10NbCeZr ($\bigcirc$) and 30NbCeZr ($\bullet$) catalysts. The $NH_3$-SCR activity of the fresh $CeO_2$-$ZrO_2$ supported catalysts

is slightly inferior to that obtained for the CeO$_2$ (La, Pr, Nd) based catalysts. However, the thermal stability obtained particularly for the 10NbCeZr sample is extremely high and is probably caused by the higher thermal stability of the ceria-zirconia solid solution as compared to that of ceria in 10NbCe.

Summarizing the results leads to the conclusion that the simple combination of niobium oxide and cerium oxide results in a very promising NH$_3$-SCR catalyst wherein the content of cerium oxide shall be greater than 10 wt% as compared to the weight of the catalytic active component (without carrier substance, such as titania, zirconia, silicia, alumina). Preferably, the niobium content shall range above approximately 10 wt%, in particular as shown in the present examples at 10 to 50 wt%. The activity of a niobia-ceria catalyst is significantly enhanced by increasing the oxygen mobility of the CeO$_2$ lattice. An almost complete conversion of NO was obtained between 250 - 500 ˚C when CeO$_2$ was doped with La, Pr and Nd oxides. The high resistance of the catalyst against SO$_2$ poisoning was demonstrated by the very low decrease of the SCR activity at temperatures below 300 ˚C, after 5 h exposure at 350 ˚C to a gas mixture containing 300 ppm SO$_2$. A mild sulfation of the catalyst surface leads to a considerable increase of the high temperature activity and can be regarded as a sulfur-promoting treatment. The niobia-ceria catalysts exhibit also a high thermal stability. After calcination in air at 800 ˚C for 12 h the 10NbCe and 30NbCe catalysts maintained more than half of their initial high temperature activity (>300 ˚C). The thermal stability of the niobia-ceria catalyst can be further increased by replacing the ceria with a ceria-zirconia mixed oxide, thereby observing that the content of ceria still ranges at the level given above.

## Claims

1. Catalyst for a DeNOx-application having a catalytic active component; said catalytic active component comprises cerium oxide and niobium oxide whereby the content of cerium oxide is at least 10 wt% and the content of niobium oxide is at least 10 wt%.

2. The catalyst according to claim 1, wherein the content of cerium oxide is at least 50 wt% and the content of niobium oxide is at least 10 wt%.

3. The catalyst according to claim 1, wherein the content of cerium oxide is 50 - 70 wt% and the content of niobium oxide 30-50 wt%.

4. The catalyst according to claim 1 - 3, wherein the cerium oxide is doped with at least one oxide of lanthanium, praseodymium and neodymium or mixtures thereof.

5. The catalyst according to claim 1 - 3, wherein the cerium oxide may be mixed with zirconia, preferably a solid solution of ceria and zirconia whereby the content in wt% of ceria is higher than that of zirconia.

6. The catalyst according to any of the preceding claims 1 to 5 wherein a mixture of cerium oxide and niobium oxide is achieved by coprecipitation of a cerium precursor and niobium precursor and subsequent calcination in air.

7. The catalyst according to any of the preceding claims 1 to 5, wherein a mixture of cerium oxide and niobium oxide is achieved by wet mechanical mixing of a cerium precursor and niobium precursor and subsequent calcination in air.

8. The catalyst according to any of the preceding claims 1 to 5, wherein a mixture of cerium oxide and niobium oxide is achieved by any method which leads to an intimate contact between the niobia and ceria component, e.g. impregnation, sol-gel process, and flame spray pyrolysis.

9. The catalyst according to any of the preceding claims 1 to 8, wherein the surface of the catalyst was mild sulfated which refers to an exposure of the catalyst to a sulfur species containing environment for a time period which leads only to the catalyst surface sulfation and does not advance to the bulk catalyst species.

10. The catalyst according to any of the preceding claims 1 to 9, which can be used in form of powders, coated on pellets of any form and size, or extruded in various shapes, such as cylinders, stars, hollow cylinder, etc.

11. The catalyst according to any of the preceding claims 1 to 9, which can be extruded with extrusion agents, binders and other components in form of a honeycomb monolith or washcoated on metallic, ceramic or carbonaceous honeycomb monoliths.

12. A process for a SCR of nitrogen oxides comprised in an exhaust gas of a combustion machine or any other NOx source comprising the step of bringing the nitrogen oxides into contact with a catalyst according to any of the claims 1 to 11.

13. The process according to claim 12, wherein the step of bringing the nitrogen oxides into contact with the catalyst is carried out at elevated temperatures in the range from 150 to 550 $^\circ$C, at pressure in the range from $10^3$ to $10^5$ hPa and at an gas hourly space velocity (GHSV) in the range from $5*10^3$ to $10^5$ h$^{-1}$.

Fig. 1

Fig. 2

Fig. 3

Fig. 4

Fig. 5

Fig. 6

Fig. 7

Europäisches
Patentamt

European
Patent Office

Office européen
des brevets

## EUROPEAN SEARCH REPORT

Application Number

EP 10 15 7791

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/304566 A1 (GOLDEN STEPHEN J [US] ET AL) 10 December 2009 (2009-12-10)<br>* claims; examples *<br>----- | 1-13 | INV.<br>B01J23/10<br>B01J23/20<br>B01D53/86<br>B01D53/94 |
| X | US 6 468 941 B1 (BORTUN ANATOLY I [US] ET AL) 22 October 2002 (2002-10-22)<br>* claims; examples *<br>----- | 1-13 | |
| X | EP 0 624 393 A1 (SAKAI CHEMICAL INDUSTRY CO [JP]; PETROLEUM ENERGY CENTER FOUND [JP]; C) 17 November 1994 (1994-11-17)<br>* claims; examples *<br>----- | 1-13 | |
| | | | **TECHNICAL FIELDS SEARCHED (IPC)**<br><br>B01J<br>B01D |

The present search report has been drawn up for all claims

| Place of search | Date of completion of the search | Examiner |
|---|---|---|
| The Hague | 3 September 2010 | Schoofs, Bart |

EPO FORM 1503 03.82 (P04C01)

**EP 2 368 628 A1**

## ANNEX TO THE EUROPEAN SEARCH REPORT
## ON EUROPEAN PATENT APPLICATION NO.

EP 10 15 7791

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-2010

| Patent document cited in search report | | Publication date | Patent family member(s) | | Publication date |
|---|---|---|---|---|---|
| US 2009304566 | A1 | 10-12-2009 | NONE | | |
| US 6468941 | B1 | 22-10-2002 | US 2002195173 | A1 | 26-12-2002 |
| EP 0624393 | A1 | 17-11-1994 | DE 69427932 | D1 | 20-09-2001 |
| | | | DE 69427932 | T2 | 04-04-2002 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090304566 A1
- WO 2008051752 A2
- US 20070099795 A1
- US 20090297419 A
- JP 3510541 B